# EUROPEAN PATENT APPLICATION

(11) **EP 4 574 297 A1**
(43) Date of publication of application: **25.06.2025**
(21) Application number: 23865612.8
(22) Date of filing: 15.09.2023
(51) Int. Cl.: B21D 39/06, B21D 39/20, B21D 53/08, F28F 1/40, C01B 32/25

(54) **METHOD FOR MANUFACTURING HEAT EXCHANGER**

(30) Priority: 16.09.2022 JP 2022147524; 08.09.2023 JP 2023146196
(71) Applicant: DAIKIN INDUSTRIES, LTD., Osaka-shi, Osaka 530-0001 (JP)
(72) Inventor: MATOBA Yoshiaki, Osaka-shi, Osaka 530-0001 (JP); SHIMIZU Motofumi, Osaka-shi, Osaka 530-0001 (JP); TAKAHASHI Takayuki, Osaka-shi, Osaka 530-0001 (JP)
(74) Representative: Hoffmann Eitle
(86) International application number: PCT/JP2023/033675
(87) International publication number: WO 2024/058263

(57) **Abstract**

A tube insertion step and a tube expansion step are performed in a method for manufacturing a heat exchanger (10). In the tube insertion step, a heat transfer tube is inserted in a through hole of a fin. In the tube expansion step, the outside diameter of the heat transfer tube inserted to pass through the fin is increased. In the tube expansion step, a tube expansion plug (60) is pushed into the heat transfer tube to increase the outside diameter of the heat transfer tube. The tube expansion plug (60) includes a plug body (62) made of a cemented carbide and a diamond film (64) configured to cover a surface of the plug body (62).

## Description

### TECHNICAL FIELD

The present disclosure relates to a method for manufacturing a heat exchanger.

### BACKGROUND ART

Patent Document 1 discloses a tube expansion plug. The tube expansion plug is used in the process of manufacturing a heat exchanger. Specifically, in a tube expansion step, in which the outside diameter of a heat transfer tube is increased so that fins are fixed to the heat transfer tube, the tube expansion plug is pushed into the heat transfer tube.

Patent Document 1 discloses that a diamond-like carbon (DLC) film is formed on a surface of the tube expansion plug to reduce the amount of lubricant used to reduce the friction between the heat transfer tube and the tube expansion plug.

### CITATION LIST

### PATENT DOCUMENT

Patent Document 1: Japanese Patent No. 6604701

### SUMMARY OF THE INVENTION

### TECHNICAL PROBLEM

The DLC film has the property of being relatively easy to wear. Thus, there has been a problem that the tube expansion plug needs to be replaced more frequently, which increases cost. If the tube expansion plug is replaced less frequently, it means that the tube expansion plug is used with almost no DLC film: the amount of the lubricant applied to the heat transfer tube before the tube expansion step cannot be reduced much.

It is an object of the present disclosure to reduce the amount of lubricant for use in a tube expansion step of increasing the outside diameter of a heat transfer tube.

### SOLUTION TO THE PROBLEM

A first aspect of the present disclosure is directed to a method for manufacturing a heat exchanger (10), the heat exchanger (10) including a plate-shaped fin (20) and a circular heat transfer tube (30), the method including: a tube insertion step of inserting the heat transfer tube (30) in a through hole (21) formed in the fin (20); and a tube expansion step of increasing an outside diameter of the heat transfer tube (30) inserted to pass through the fin (20) in the tube insertion step in order to fix the fin (20) to the heat transfer tube (30). In the tube expansion step, a tube expansion plug (60) is pushed into the heat transfer tube (30) to increase the outside diameter of the heat transfer tube (30), the tube expansion plug (60) including a plug body (62) made of a cemented carbide and a diamond film (64) configured to cover a surface of the plug body (62).

According to the first aspect, the tube expansion plug (60) including the plug body (62) and the diamond film (64) is used in the tube expansion step. The diamond film (64) has the properties of being harder than a DLC film and less prone to wear. Thus, the tube expansion plug (60) can be replaced less frequently. Further, since the tube expansion plugs (60) each having the diamond film (64) are used, it is possible to eliminate the need for the lubricant for lubricating a contact portion between the heat transfer tube (30) and the tube expansion plug (60) in the tube expansion step. Further, in a case of applying the lubricant to the inner surface of the heat transfer tube (30) before the tube expansion step, it is possible to reduce the amount of the lubricant to be applied.

A second aspect of the present disclosure is an embodiment of the first aspect. In the second aspect, a material of the heat transfer tube (30) is aluminum or aluminum alloy, and the heat transfer tube (30) is an internally grooved tube having a plurality of grooves in an inner surface.

According to the second aspect, the heat transfer tube (30) forming the heat exchanger (10) is an internally grooved tube made of aluminum or aluminum alloy. In the tube expansion step, the tube expansion plug (60) is pushed into the heat transfer tube (30).

Here, if the tube expansion plug (60) is pushed into the heat transfer tube (30) that is an internally grooved tube, only a part of the inner surface of the heat transfer tube (30) comes into contact with the tube expansion plug (60). This makes the contact pressure acting on the outer surface of the tube expansion plug (60) higher than in a case where the tube expansion plug (60) is pushed into a tube without a groove in the inner surface. On the other hand, the tube expansion plug (60) used in the manufacturing method of the second aspect has an outer surface configured as the diamond film (64). Accordingly, even if the heat transfer tube (30) is an internally grooved tube, it is possible to reduce the amount of aluminum adhering to the tube expansion plug (60).

A third aspect of the present disclosure is an embodiment of the first or second aspect. **In** the third aspect, the tube expansion plug (60) for use in the tube expansion step is configured such that an arithmetic average roughness Ra of a surface of the diamond film (64) of the tube expansion plug (60) is 0.023 µm or less.

According to the third aspect, the tube expansion plug (60) with the diamond film (64) whose surface roughness is relatively low is pushed into the heat transfer tube (30) made of aluminum or aluminum alloy in the tube expansion step. The diamond film (64) has a relatively low compatibility with aluminum. Particularly in this aspect, the diamond film (64) provided for the tube expansion plug (60) has a relatively low surface roughness. It is thus possible to reduce the amount of aluminum adhering to the tube expansion plug (60) in the tube expansion step.

A fourth aspect of the present disclosure is an embodiment of the first or second aspect. **In** the fourth aspect, an inside diameter of the heat transfer tube (30) before execution of the tube expansion step is an inside diameter before tube expansion, the tube expansion plug (60) has a base end (60b) and a distal end (60a), and the tube expansion plug (60) includes: a first portion (71) located between the base end (60b) and the distal end (60a), the first portion (71) being a portion at which the tube expansion plug (60) has a largest outside diameter; an enlarged diameter portion (76) that is a portion from the distal end (60a) to the first portion (71), the enlarged diameter portion (76) having an outside diameter that increases gradually from the distal end (60a) toward the first portion (71); and a second portion (72) that is a portion of the enlarged diameter portion (76), the second portion (72) having an outside diameter equal to the inside diameter before tube expansion, and an arithmetic average roughness Ra of a surface of the diamond film (64) at the second portion (72) is lower than an arithmetic average roughness Ra of a surface of the diamond film (64) at the first portion (71).

According to the fourth aspect, the tube expansion plug (60) includes the first portion (71) and the second portion (72). The second portion (72) comes into contact with the inner surface of the heat transfer tube (30) first as the tube expansion plug (60) is inserted in the heat transfer tube (30) from the distal end (60a). After that, as the tube expansion plug (60) is further inserted in the heat transfer tube (30), the region of the tube expansion plug (60) between the second portion (72) and the first portion (71) pushes and expands the heat transfer tube (30) radially outward.

**In** the process of inserting the tube expansion plug (60) into the heat transfer tube (30), the second portion (72) of the tube expansion plug (60) comes into contact with the inner surface of the heat transfer tube (30) first. **In** the tube expansion plug (60) according to the fourth aspect, the arithmetic average roughness Ra of the surface of the diamond film (64) at the second portion (72) is lower than the arithmetic average roughness Ra of the surface of the diamond film (64) at the first portion (71). This means that the surface roughness of the second portion (72), which comes into contact with the inner surface of the heat transfer tube (30) first in the process of inserting the tube expansion plug (60) in the heat transfer tube (30), is relatively low, making it possible to reduce the amount of aluminum adhering to the tube expansion plug (60).

A fifth aspect of the present disclosure is an embodiment of the fourth aspect. **In** the fifth aspect, the arithmetic average roughness Ra of the surface of the diamond film (64) at the first portion (71) is 0.023 µm or less.

According to the fifth aspect, the numerical range of the arithmetic average roughness Ra of the surface of the diamond film (64) at the first portion (71) is specified.

A sixth aspect of the present disclosure is an embodiment of the fourth aspect. In the sixth aspect, the arithmetic average roughness Ra of the surface of the diamond film (64) at the second portion (72) is 0.013 µm or less.

According to the sixth aspect, the numerical range of the arithmetic average roughness Ra of the surface of the diamond film (64) at the second portion (72) is specified.

A seventh aspect of the present disclosure is an embodiment of the fourth aspect. In the seventh aspect, the arithmetic average roughness Ra of the surface of the diamond film (64) at the first portion (71) is 0.023 µm or less, and the arithmetic average roughness Ra of the surface of the diamond film (64) at the second portion (72) is 0.013 µm or less.

According to the seventh aspect, the numerical range of the arithmetic average roughness Ra of each of the surface of the diamond film (64) at the first portion (71) and the surface of the diamond film (64) at the second portion (72) is specified.

An eighth aspect of the present disclosure is an embodiment of any one of the first to seventh aspects. The method of the eighth aspect further includes an application step of applying a lubricant to an inner surface of the heat transfer tube (30), the application step being performed before the tube expansion step, wherein an amount of the lubricant applied to the inner surface of the heat transfer tube (30) in the application step is less than 0.5 g per meter of a length of the heat transfer tube (30).

According to the eighth aspect, a predetermined amount of lubricant is applied to the inner surface of the heat transfer tube (30) in the application step. The application step is performed before the tube expansion step. The timing of the application step is not always immediately before the tube expansion step.

A ninth aspect of the present disclosure is an embodiment of any one of the first to seventh aspects. In the ninth aspect, the tube expansion step is performed with no lubricant applied to the inner surface of the heat transfer tube (30).

According to the ninth aspect, the tube expansion plug (60) is pushed into the heat transfer tube (30) for which no lubricant is applied to the inner surface, in the tube expansion step.

A tenth aspect of the present disclosure is an embodiment of any one of the first to ninth aspects. In the tenth aspect, in the tube expansion step, the outside diameter of the heat transfer tube (30) is increased to 104% or more and 112% or less of the outside diameter of the heat transfer tube (30) before the tube expansion step.

According to the sixth aspect, the tube expansion rate of the heat transfer tube (30) in the tube expansion step is set to be 4% or more and 12% or less.

### BRIEF DESCRIPTION OF THE DRAWINGS

FIG. 1 is a schematic perspective view of a heat exchanger.
FIG. 2 is a cross-sectional view of a heat exchanger illustrating a cross section including the center axis of a heat transfer tube.
FIG. 3 is a cross-sectional view of the heat transfer tube.
FIG. 4 is a flowchart showing a method for manufacturing a heat exchanger.
FIG. 5 is a perspective view of fins and the heat transfer tube in a tube insertion step.
FIG. 6 is a plan view of a tube expander and an assembly provided for the tube expander.
FIG. 7 illustrates a cross section of the heat transfer tube and a tube expansion plug during a tube expansion step.
FIG. 8 is a plan view of the tube expansion plug.
FIG. 9 is a cross-sectional view of the tube expansion plug.
FIG. 10 is a cross-sectional view of the heat transfer tube before being expanded.

### DESCRIPTION OF EMBODIMENT

This embodiment is directed to a method for manufacturing a heat exchanger (10). In this manufacturing method, a tube expander (50) including a tube expansion plug (60) is used.

### - Heat Exchanger -

The heat exchanger (10) manufactured by the manufacturing method of this embodiment is a so-called "cross-fin-type" heat exchanger. The heat exchanger (10) is provided in a refrigerant circuit, such as an air conditioner, and is used to exchange heat between a refrigerant and air.

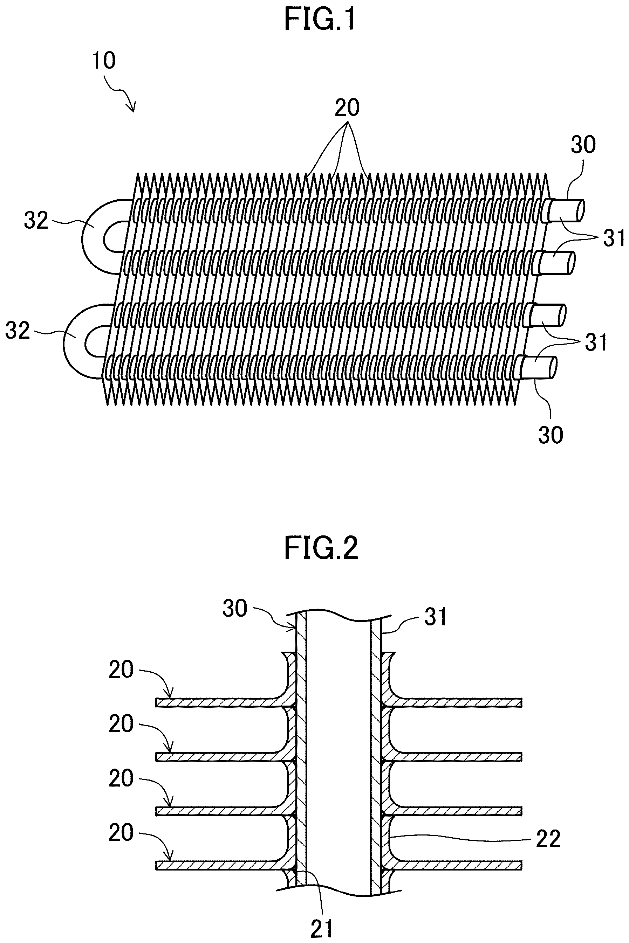

As illustrated in FIG. 1, the heat exchanger (10) includes a plurality of fins (20) and a plurality of heat transfer tubes (30). The number and shape of the fins (20) and the heat transfer tubes (30) illustrated in FIG. 1 are merely examples.

Each fin (20) is formed in a rectangular plate shape. The material of the fin (20) is aluminum or aluminum alloy. The plurality of fins (20) are aligned in the thickness direction of the fins (20). Each fin (20) may have a cut-and-raised portion (such as a louver or a slit) for accelerating heat transfer.

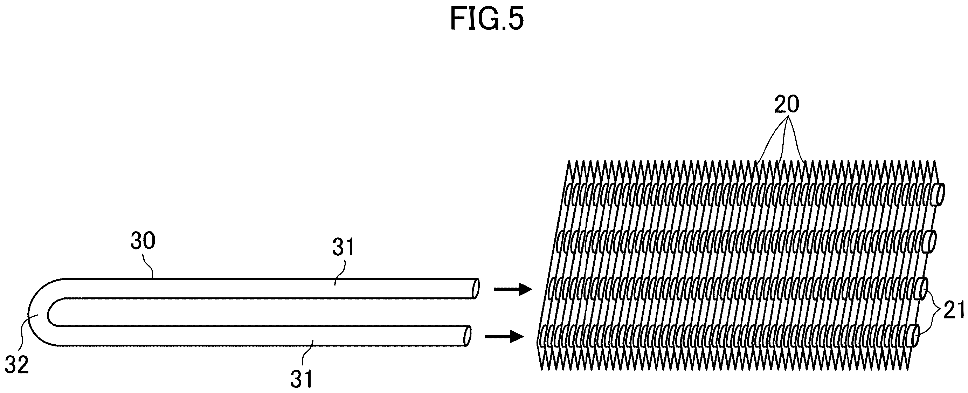

Each fin (20) has a plurality of through holes (21). The plurality of through holes (21) of each of the fins (20) illustrated in FIG. 1 are aligned along the long side of the fin (20) (see FIG. 5).

As illustrated in FIG. 2, each of the fins (20) has collars (22) equal in number to the through holes (21). The collars (22) are cylindrical portions continuous with the peripheries of the through holes (21).

The heat transfer tubes (30) are circular tubes in a hairpin shape. The material of the heat transfer tubes (30) is aluminum or aluminum alloy. Each heat transfer tube (30) includes a pair of straight portions (31) and one curved portion (32). As illustrated in FIG. 2, the straight portions (31) of the heat transfer tube (30) are inserted in the through holes (21) of the fins (20). The shape of the heat transfer tube (30) is not limited to the hairpin shape. The heat transfer tube (30) may have a straight shape, for example.

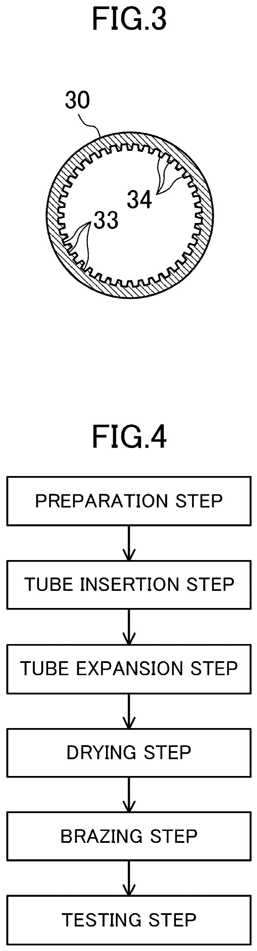

As illustrated in FIG. 3, each heat transfer tube (30) is an internally grooved tube having a plurality of grooves in an inner surface. Specifically, the inner surface of the heat transfer tube (30) has a plurality of grooves (33) and a plurality of ridges (34) alternately formed in the circumferential direction of the heat transfer tube (30). Each of the grooves (33) and the ridges (34) extends helically in the axial direction of the heat transfer tube (30). Each of the grooves (33) and the ridges (34) may extend linearly in the axial direction of the heat transfer tube (30).

Although not shown in FIG. 1, the heat exchanger (10) includes a member, such as a U-shaped tube, for connecting the adjacent heat transfer tubes (30) together.

### - Method for Manufacturing Heat Exchanger -

As shown in FIG. 4, a method for manufacturing a heat exchanger (10) includes a preparation step, a tube insertion step, a tube expansion step, a drying step, a brazing step, and a testing step, which are performed in this order.

### <Preparation Step>

In the preparation step, fins (20) and heat transfer tubes (30) are formed into a predetermined shape.

Each fin (20) is formed into a rectangular plate having through holes (21) and collars (22) by pressing a plate material. In the preparation step, the plurality of fins (20) are aligned in the thickness direction of the fins (20).

Each heat transfer tube (30) is formed into a hairpin shape by bending a straight tube. In the bending, oil for use in work process adheres to the inner surface of the heat transfer tube (30).

### <Tube Insertion Step>

As illustrated in FIG. 5, in the tube insertion step, the straight portions (31) of the heat transfer tube (30) are inserted in the through holes (21) of the plurality of fins (20) aligned in the preparation step. An assembly (15) comprising the fins (20) and the heat transfer tubes (30) is formed in the tube insertion step. The assembly (15) at the time when the tube insertion step has ended has a gap between the collars (22) of the fins (20) and the heat transfer tubes (30): the fins (20) are not fixed to the heat transfer tubes (30).

### <Tube Expansion Step>

The tube expansion step is the step of increasing the outside diameter of the heat transfer tubes (30) to fix the fins (20) to the heat transfer tubes (30). A step of applying lubricant to the inner surfaces of the heat transfer tubes (30) is not performed in a period from the end of the preparation step to the end of the tube expansion step. Thus, the tube expansion step is performed with substantially no lubricant for reducing the friction between the heat transfer tube (30) and the tube expansion plug (60), applied to the inner surfaces of the heat transfer tubes (30).

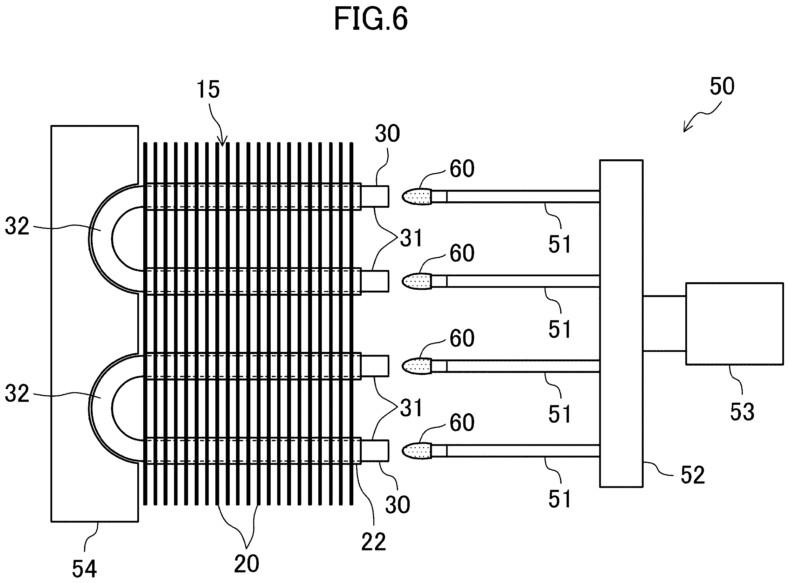

As illustrated in FIG. 6, the tube expansion step is performed using the tube expander (50). The configuration of the tube expander (50) will be described later.

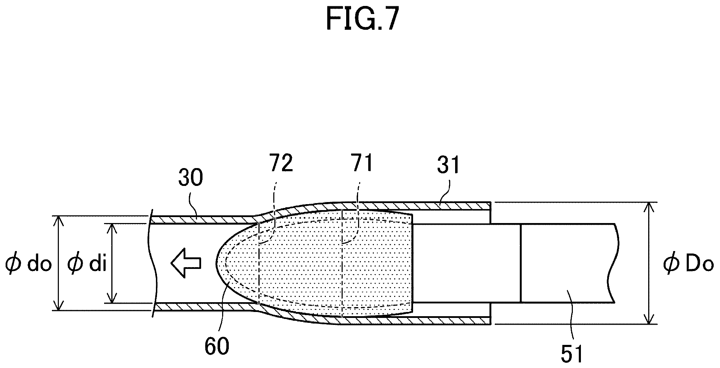

In the tube expansion step, the assembly (15) formed in the tube insertion step is set on the tube expander (50). The tube expander (50) pushes the tube expansion plugs (60) into the straight portions (31) of the heat transfer tubes (30) forming the assembly (15). The outside diameter "dh" of the thickest portion of the tube expansion plug (60) is greater than the inside diameter "di" of the straight portion (31) of the heat transfer tube (30) before tube expansion. As illustrated in FIG. 7, the straight portion (31) of the heat transfer tube (30) is expanded, and is plastically deformed, by the tube expansion plug (60) pushed into the straight portion (31), which results in an increase in the outside diameter of the straight portion (31).

In the tube expansion step of this embodiment, the rate of enlargement "R" of the outside diameter of the heat transfer tube (30) is 4% or more and 12% or less. The rate of enlargement "R" is a value that indicates (Do - do)/do in terms of percentage. The "do" represents the outside diameter of the straight portion (31) of the heat transfer tube (30) before tube expansion. The "Do" represents the outside diameter of the straight portion (31) of the heat transfer tube (30) after tube expansion. Thus, the outside diameter "Do" of the straight portion (31) after tube expansion is 104% or more and 112% or less of the outside diameter "do" of the straight portion (31) before tube expansion.

When the outside diameter of the straight portion (31) of the heat transfer tube (30) is increased in the tube expansion step, the outer surface of the straight portion (31) is brought into tight contact with the inner surfaces of the collars (22) of the fins (20) (see FIG. 2). As a result, the fins (20) are fixed to the heat transfer tubes (30).

### <Drying Step>

The drying step is the step of removing the oil for use in work process that has adhered to the inner surface of the heat transfer tube (30). In the drying step, the assembly (15) after the tube expansion step is heated, and a gas, such as air, is caused to pass through the heat transfer tubes (30) of the assembly (15). The oil that has adhered to the inner surface of the heat transfer tube (30) evaporates by the heating, and is discharged to the outside of the heat transfer tube (30) by the gas flowing through the heat transfer tube (30).

### <Brazing Step>

**In** the brazing step, members, such as U-shaped tubes, connecting the adjacent heat transfer tubes (30) together are attached to the assembly (15) by brazing. The heat exchanger (10) is completed when the brazing step ends.

### <Testing Step>

**In** the testing step, an airtightness test for the heat exchanger (10) is performed. Specifically, in the testing step, a high-pressure gas is supplied to the heat transfer tubes (30) to check leakage of the gas from the heat transfer tubes (30).

### - Tube Expander -

As illustrated in FIG. 6, the tube expander (50) includes the plurality of tube expansion plugs (60) and a plurality of rods (51). The number of the tube expansion plugs (60) of the tube expander (50) is twice the number of the heat transfer tubes (30) included in the assembly (15) (in other words, equal to the number of the straight portions (31) included in the assembly (15)). The number of the rods (51) of the tube expander (50) is equal to the number of the tube expansion plugs (60). The tube expander (50) includes one connecting block (52), one actuator (53), and one holding block (54).

The tube expansion plugs (60) are bullet-shaped members that taper down toward their distal ends. The tube expansion plugs (60) will be described in detail later.

The rods (51) are steel members. Each of the plurality of rods (51) corresponds to one of the tube expansion plugs (60). Each rod (51) has a distal end to which one of the tube expansion plugs (60) corresponding to the rod (51) is connected.

The rods (51) to which the tube expansion plugs (60) are connected are arranged in parallel at predetermined intervals from one another. The interval between the rods (51) is substantially equal to the interval between the straight portions (31) in the assembly (15). The rods (51) are arranged to be substantially coaxial with the straight portions (31) of the heat transfer tubes (30) of the assembly (15) set on the tube expander (50). The tube expansion plugs (60) attached to the rods (51) are opposed to the ends of openings of the corresponding straight portions (31).

The connecting block (52) is an elongated steel member. The connecting block (52) is arranged such that its longitudinal direction is orthogonal to the axial direction of the rods (51). The base ends of all of the rods (51) are connected to the connecting block (52).

The actuator (53) is a member for actuating the connecting block (52). The actuator (53) includes, for example, a feed screw and an electric motor. The actuator (53) is configured to reciprocate the connecting block (52) in the axial direction of the rods (51). The tube expansion plugs (60) move in the axial direction of the rods (51) when the actuator (53) actuates the connecting block (52).

The holding block (54) is a steel member for holding the assembly (15). The holding block (54) is arranged to face the tube expansion plugs (60) with the assembly (15) interposed therebetween. The holding block (54) holds the curved portions (32) of the heat transfer tubes (30) of the assembly (15), and regulates displacement of the assembly (15) during tube expansion.

### - Tube Expansion Plug -

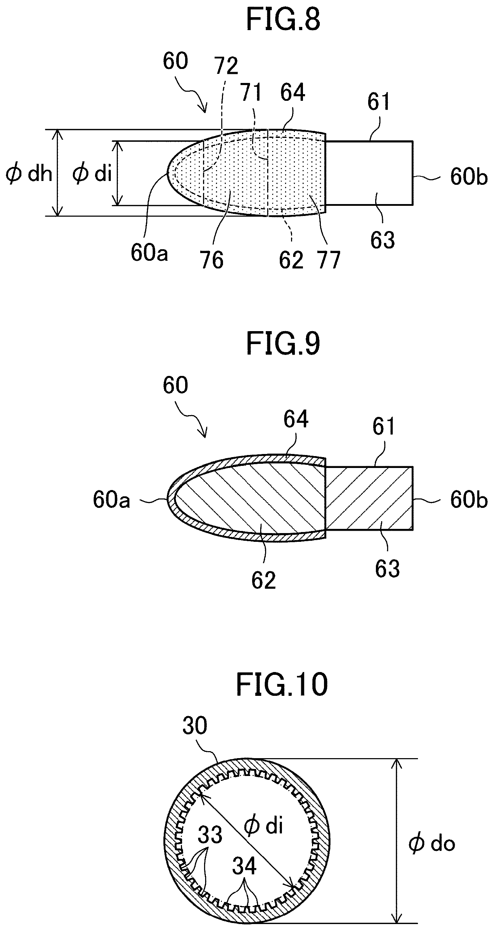

As illustrated in FIG. 8 and FIG. 9, each of the tube expansion plugs (60) includes a metal member (61) and a diamond film (64).

The metal member (61) includes a head portion (62) and a base portion (63). The head portion (62) and the base portion (63) are separate members. The head portion (62) and the base portion (63) are joined to each other by brazing or screw fastening, for example.

The head portion (62) is a plug body. The material of the head portion (62) is a cemented carbide. The cemented carbide is an alloy made of a metal carbide and an iron-based metal. Examples of the cemented carbide include a WC-Co alloy.

The head portion (62) is a bullet-shaped portion that tapers down toward its distal end. The shape of the head portion (62) illustrated in FIG. 8 and FIG. 9 is merely an example. Examples of the shape of the head portion (62) include a spherical shape, an ellipsoidal shape, a conical shape, and a polygonal pyramid shape.

The base portion (63) is a short columnar portion. The material of the base portion (63) is chromium-molybdenum steel, for example. The base portion (63) is joined to the base end of the head portion (62). The base portion (63) is arranged to be coaxial with the head portion (62). The outside diameter of the base portion (63) is smaller than the maximum value "dh" of the outside diameter of the head portion (62).

The diamond film (64) covers the outer surface of the head portion (62) of the metal member (61). The diamond film (64) is film-like diamond formed by a chemical vapor deposition (CVD) method. The thickness of the diamond film (64) is about 8 µm.

The distal end (60a) of the tube expansion plug (60) is the left end of the tube expansion plug (60) illustrated in FIG. 8. The base end (60b) of the tube expansion plug (60) is the right end of the tube expansion plug (60) illustrated in FIG. 8.

The tube expansion plug (60) includes a first portion (71). The first portion (71) is a circular portion orthogonal to the center axis of the tube expansion plug (60). The first portion (71) is located between the distal end (60a) and the base end (60b) of the tube expansion plug (60), and is a portion at which the tube expansion plug (60) has the largest outside diameter. Thus, the outside diameter of the first portion (71) is the same as the maximum value "dh" of the outside diameter of the head portion (62).

Of the tube expansion plug (60), a portion made of the head portion (62) and the diamond film (64) includes sections which are an enlarged diameter portion (76) and a reduced diameter portion (77). The enlarged diameter portion (76) is a portion closer to the distal end (60a) than the first portion (71). The outside diameter of the enlarged diameter portion (76) increases gradually from the distal end (60a) of the tube expansion plug (60) toward the first portion (71). The reduced diameter portion (77) is a portion closer to the base end (60b) than the first portion (71). The outside diameter of the reduced diameter portion (77) decreases gradually from the first portion (71) of the tube expansion plug (60) toward the base end (60b).

The tube expansion plug (60) includes a second portion (72). The second portion (72) is a circular portion orthogonal to the center axis of the tube expansion plug (60). The second portion (72) is a portion of the enlarged diameter portion (76). The second portion (72) is located between the distal end (60a) of the tube expansion plug (60) and the first portion (71), and is a portion whose outside diameter is equal to the inside diameter "di" of the heat transfer tube (30) before tube expansion.

As illustrated in FIG. 10, the inside diameter "di" of the heat transfer tube (30) before tube expansion is the minimum value of the inside diameter of the heat transfer tube (30) before the tube is expanded in the tube expansion step. More specifically, the inside diameter "di" of the heat transfer tube (30) before tube expansion is the diameter of the phantom circle (the circle indicated by the dash-dot-dot line in FIG. 10) passing through the tops of all of the ridges (34) in a cross section orthogonal to the center axis of the heat transfer tube (30).

**In** the tube expansion step, the tube expansion plugs (60) are inserted in the associated heat transfer tubes (30) from the distal ends (60a) (see FIG. 7). **In** the process of inserting the tube expansion plug (60) into the heat transfer tube (30), the second portion (72) comes into contact with the inner surface of the heat transfer tube (30) first. After that, as the tube expansion plug (60) is further inserted in the heat transfer tube (30), the region of the tube expansion plug (60) between the second portion (72) and the first portion (71) pushes and expands the heat transfer tube (30) radially outward.

### - Surface Roughness of Tube Expansion Plug -

According to the tube expansion plug (60) for use in the manufacturing method of this embodiment, the surface of the diamond film (64) is polished. In this tube expansion plug (60), the arithmetic average roughness Ra of the surface of the diamond film (64) at the second portion (72) is lower than the arithmetic average roughness Ra of the surface of the diamond film (64) at the first portion (71). In the tube expansion plug (60), the arithmetic average roughness Ra of the surface of the diamond film (64) at the first portion (71) is 0.023 µm or less, and the arithmetic average roughness Ra of the surface of the diamond film (64) at the second portion (72) is 0.013 µm or less.

**[Table 1]**

| | Surface Roughness Ra of First Portion (Maximum Diameter) (*µ*m) | Surface Roughness Ra of Second Portion (Initial Contact) (*µ*m) | Adhesion of Aluminum to Tube Expansion Plug | Tube Expansion Thrust (N) |
|---|---|---|---|---|
| Test Piece 1 | 0.012 | 0.009 | NO | 228 |
| Test Piece 2 | 0.018 | 0.013 | NO | 287 |
| Test Piece 3 | 0.023 | 0.010 | NO | 208 |
| Test Piece 4 | 0.026 | 0.026 | YES | 328 |
| Test Piece 5 | 0.044 | 0.060 | YES | 344 |
| Test Piece 6 | 0.049 | 0.058 | YES | 397 |

The numerical range of the surface roughness of the diamond film (64) will be described with reference to Table 1. Table 1 shows the results of a tube expansion test performed on each of test pieces 1 to 6. The test pieces 1 to 6 are tube expansion plugs (60) different from one another only in the surface roughness of the diamond film (64).

In the tube expansion test, a tube expansion plug (60) is inserted in one straight heat transfer tube to expand the heat transfer tube. The heat transfer tube used in the tube expansion test is an internally grooved tube made of aluminum alloy. The heat transfer tube has an outside diameter of 7 mm and a length of 150 mm. The tube expansion rate in the tube expansion test is 10%. The tube expansion test was performed with 0.01 g of lubricant applied to the inner surface of the heat transfer tube.

In the tube expansion test, the tube expansion plug (60), which is a test piece, was inserted in the heat transfer tube, and a visual check was conducted to see whether or not aluminum forming the heat transfer tube had adhered to the tube expansion plug (60) removed from the heat transfer tube after the tube expansion. As shown in Table 1, no adhesion of aluminum was visually recognized on the surfaces of the tube expansion plugs (60) as the test pieces 1, 2, and 3. In contrast, adhesion of aluminum was visually recognized on the surfaces of the tube expansion plugs (60) as the test pieces 4, 5, and 6.

Adhesion of aluminum to the tube expansion plug (60) in the tube expansion step means that the heat transfer tube (30) is damaged in the tube expansion step. Thus, the tube expansion plug (60) to which no aluminum adhesion has occurred in the tube expansion test needs to be used in the tube expansion step.

Accordingly, the following tube expansion plug (60) is used in the tube expansion step of the manufacturing method of this embodiment, in which the arithmetic average roughness "Ra" of the surface of the diamond film (64) at the first portion (71) is 0.023 µm or less and the arithmetic average roughness "Ra" of the surface of the diamond film (64) at the second portion (72) is 0.013 µm or less. As a result, substantially no adhesion of aluminum to the tube expansion plug (60) occurs in the tube expansion step of the manufacturing method of this embodiment.

As described above, in the process of inserting the tube expansion plug (60) in the heat transfer tube (30), the second portion (72) comes into contact with the inner surface of the heat transfer tube (30) first. Thus, a relatively higher load acts on the surface of the diamond film (64) at the second portion (72) as compared to the surface of the diamond film (64) at another portion. This means that the material forming the heat transfer tube (30) (aluminum in this embodiment) adheres more easily to the surface of the diamond film (64) at the second portion (72) than to the surface of the diamond film (64) at another portion.

To address this problem, the following tube expansion plug (60) is used in the tube expansion step of the manufacturing method of this embodiment, in which "the arithmetic average roughness Ra of the surface of the diamond film (64) at the second portion (72)" is lower than "the arithmetic average roughness Ra of the surface of the diamond film (64) at the first portion (71)." As a result, substantially no adhesion of aluminum to the tube expansion plug (60) occurs in the tube expansion step of the manufacturing method of this embodiment.

In the tube expansion test, the tube expansion thrust of each of the test pieces 1 to 6 was measured. The tube expansion thrust is a force that needs to be applied to the tube expansion plug (60) so that the tube expansion plug (60), which is a test piece, be inserted in the heat transfer tube. The tube expansion thrust of each of the test piece 1 and the test piece 3 is much lower than the tube expansion thrust of the test piece 2. Based on this, it is estimated that the surface roughness of the second portion (72) affects the tube expansion thrust. Thus, it is further desirable that the tube expansion plug (60) for use in the tube expansion step of this embodiment be configured such that the arithmetic average roughness Ra of the surface of the diamond film (64) at the second portion (72) is 0.010 µm or less.

### - Feature (1) of Embodiment -

According to the method for manufacturing the heat exchanger (10) of this embodiment, the tube expansion plugs (60) each including the metal member (61) and the diamond film (64) are used in the tube expansion step. The diamond film (64) has the properties of being harder than a DLC film and less prone to wear. Thus, the tube expansion plug (60) can be replaced less frequently by using the tube expansion plug (60) having the diamond film (64).

According to the method for manufacturing the heat exchanger (10) of this embodiment, the tube expansion plugs (60) each having the diamond film (64) are used, which eliminates the need for the lubricant for lubricating a contact portion between the heat transfer tube (30) and the tube expansion plug (60) in the tube expansion step. It is thus possible to omit a step of removing the lubricant from the heat transfer tube (30) after the end of the tube expansion step, simplify a facility used to manufacture the heat exchanger (10), and shorten the time required to manufacture the heat exchanger (10).

### - Feature (2) of Embodiment -

According to the heat exchanger (10) manufactured by the manufacturing method of this embodiment, each of the heat transfer tubes (30) is an internally grooved tube made of aluminum or aluminum alloy. On the other hand, the tube expansion plugs (60) each having the diamond film (64) are used in the tube expansion step of the manufacturing method of this embodiment. The diamond film (64) has a relatively low compatibility with aluminum. Thus, according to this embodiment, it is possible to reduce the amount of aluminum adhering to the tube expansion plugs (60) in the tube expansion step, and extend the life of the tube expansion plugs (60).

Here, if the tube expansion plug (60) is pushed into the heat transfer tube (30) that is an internally grooved tube, only a part of the inner surface of the heat transfer tube (30) comes into contact with the tube expansion plug (60). This makes the contact pressure acting on the outer surface of the tube expansion plug (60) higher than in a case where the tube expansion plug (60) is pushed into a tube without a groove in the inner surface. On the other hand, the tube expansion plug (60) used in the manufacturing method of this embodiment has an outer surface configured as the diamond film (64). Accordingly, even if the heat transfer tube (30) is an internally grooved tube, it is possible to reduce the amount of aluminum adhering to the tube expansion plug (60).

### - Feature (3) of Embodiment -

According to the method for manufacturing the heat exchanger (10) of this embodiment, the diamond film (64) of the tube expansion plug (60) for use in the tube expansion step has a surface roughness Ra of 0.023 µm or less. In other words, according to the tube expansion plug (60) for use in the tube expansion step of this embodiment, the diamond film (64) which comes into contact with the heat transfer tube (30) has a relatively low surface roughness Ra. Thus, according to this embodiment, it is possible to further reduce the amount of aluminum adhering to the tube expansion plug (60).

### - Feature (4) of Embodiment -

According to the method for manufacturing the heat exchanger (10) of this embodiment, the tube expansion plug (60) for use in the tube expansion step is configured such that the arithmetic average roughness Ra of the surface of the diamond film (64) at the second portion (72) is lower than the arithmetic average roughness Ra of the surface of the diamond film (64) at the first portion (71). This means that the surface roughness of the second portion (72), which comes into contact with the inner surface of the heat transfer tube (30) first in the process of inserting the tube expansion plug (60) in the heat transfer tube (30), is relatively low. As a result, it is possible to reduce the amount of aluminum adhering to the tube expansion plug (60).

In addition, the tube expansion plug (60) for use in the tube expansion step of this embodiment is configured such that the arithmetic average roughness Ra of the surface of the diamond film (64) at the first portion (71) is 0.023 µm or less and the arithmetic average roughness Ra of the surface of the diamond film (64) at the second portion (72) is 0.013 µm or less. In other words, according to the tube expansion plug (60) for use in the tube expansion step of this embodiment, the diamond film (64) which comes into contact with the heat transfer tube (30) has a relatively low surface roughness Ra. Thus, according to this embodiment, it is possible to further reduce the amount of aluminum adhering to the tube expansion plug (60).

### - Variations of Embodiment -

According to the method for manufacturing the heat exchanger (10) of this embodiment, an application step may be performed before the start of the tube expansion step. The application step is a step of applying the lubricant for lubricating a contact portion between the heat transfer tube (30) and the tube expansion plug (60) in the tube expansion step, to the inner surface of the heat transfer tube (30). In the application step, the lubricant is applied to the inner surfaces of all of the heat transfer tubes (30).

The amount of the lubricant applied to the heat transfer tubes (30) in the application step is smaller than the amount of the lubricant applied to heat transfer tubes in a known manufacturing method not using the tube expansion plugs (60) each having the diamond film (64). Specifically, in the application step of this variation, the amount of the lubricant applied to one heat transfer tube (30) is less than 0.5 g per meter of the length of the heat transfer tube (30). It is desirable that the amount of the lubricant applied to one heat transfer tube (30) is 0.07 g or less per meter of the length of the heat transfer tube (30). In this application step, the amount of the lubricant applied to one heat transfer tube (30) can be reduced to 0.01 g or less per meter of the length of the heat transfer tube (30).

While the embodiments and the variations thereof have been described above, it will be understood that various changes in form and details may be made without departing from the spirit and scope of the claims. The elements according to the embodiments, the variations thereof, and the other embodiments may be combined and replaced with each other.

### INDUSTRIAL APPLICABILITY

As can be seen from the foregoing description, the present disclosure is useful as a method for manufacturing a heat exchanger.

### DESCRIPTION OF REFERENCE CHARACTERS

- 10: Heat Exchanger
- 20: Fin
- 21: Through Hole
- 30: Heat Transfer Tube
- 50: Tube Expander
- 53: Actuator
- 60: Tube Expansion Plug
- 62: Head Portion (Plug Body)
- 64: Diamond Film

## Claims

1. A method for manufacturing a heat exchanger (10), the heat exchanger (10) including a plate-shaped fin (20) and a circular heat transfer tube (30), the method comprising:
a tube insertion step of inserting the heat transfer tube (30) in a through hole (21) formed in the fin (20); and
a tube expansion step of increasing an outside diameter of the heat transfer tube (30) inserted to pass through the fin (20) in the tube insertion step in order to fix the fin (20) to the heat transfer tube (30), wherein
in the tube expansion step, a tube expansion plug (60) is pushed into the heat transfer tube (30) to increase the outside diameter of the heat transfer tube (30), the tube expansion plug (60) including a plug body (62) made of a cemented carbide and a diamond film (64) configured to cover a surface of the plug body (62).

2. The method of claim 1, wherein
a material of the heat transfer tube (30) is aluminum or aluminum alloy, and
the heat transfer tube (30) is an internally grooved tube having a plurality of grooves in an inner surface.

3. The method of claim 1 or 2, wherein
the tube expansion plug (60) for use in the tube expansion step is configured such that an arithmetic average roughness Ra of a surface of the diamond film (64) of the tube expansion plug (60) is 0.023 µm or less.

4. The method of claim 1 or 2, wherein
an inside diameter of the heat transfer tube (30) before execution of the tube expansion step is an inside diameter before tube expansion,
the tube expansion plug (60) has a base end (60b) and a distal end (60a), and
the tube expansion plug (60) includes:
a first portion (71) located between the base end (60b) and the distal end (60a), the first portion (71) being a portion at which the tube expansion plug (60) has a largest outside diameter;
an enlarged diameter portion (76) that is a portion from the distal end (60a) to the first portion (71), the enlarged diameter portion (76) having an outside diameter that increases gradually from the distal end (60a) toward the first portion (71); and
a second portion (72) that is a portion of the enlarged diameter portion (76), the second portion (72) having an outside diameter equal to the inside diameter before tube expansion, and
an arithmetic average roughness Ra of a surface of the diamond film (64) at the second portion (72) is lower than an arithmetic average roughness Ra of a surface of the diamond film (64) at the first portion (71).

5. The method of claim 4, wherein
the arithmetic average roughness Ra of the surface of the diamond film (64) at the first portion (71) is 0.023 µm or less.

6. The method of claim 4, wherein
the arithmetic average roughness Ra of the surface of the diamond film (64) at the second portion (72) is 0.013 µm or less.

7. The method of claim 4, wherein
the arithmetic average roughness Ra of the surface of the diamond film (64) at the first portion (71) is 0.023 µm or less, and
the arithmetic average roughness Ra of the surface of the diamond film (64) at the second portion (72) is 0.013 µm or less.

8. The method of any one of claims 1 to 7 further comprising:
an application step of applying a lubricant to an inner surface of the heat transfer tube (30), the application step being performed before the tube expansion step, wherein
an amount of the lubricant applied to the inner surface of the heat transfer tube (30) in the application step is less than 0.5 g per meter of a length of the heat transfer tube (30).

9. The method of any one of claims 1 to 7, wherein
the tube expansion step is performed with no lubricant applied to the inner surface of the heat transfer tube (30).

10. The method of any one of claims 1 to 9, wherein
in the tube expansion step, the outside diameter of the heat transfer tube (30) is increased to 104% or more and 112% or less of the outside diameter of the heat transfer tube (30) before the tube expansion step.
